# EUROPEAN PATENT APPLICATION

(11) **EP 3 471 194 A1**
(43) Date of publication of application: **17.04.2019**
(21) Application number: 17812985.4
(22) Date of filing: 03.04.2017
(51) Int. Cl.: H01M 10/0562, H01M 4/13, H01M 4/62

(54) **ALL-SOLID BATTERY**

(30) Priority: 14.06.2016 JP 2016118392
(71) Applicant: Panasonic Intellectual Property Management Co., Ltd., Osaka-shi, Osaka 540-6207 (JP)
(72) Inventor: HASEGAWA Kenta, Osaka-shi Osaka 540-6207 (JP); KUROMIYA Takao, Osaka-shi Osaka 540-6207 (JP); IWAMOTO Kazuya, Osaka-shi Osaka 540-6207 (JP); SUGAWARA Ryo, Osaka-shi Osaka 540-6207 (JP)
(74) Representative: Vigand, Philippe
(86) International application number: PCT/JP2017/013899
(87) International publication number: WO 2017/217079

(57) **Abstract**

An all-solid battery includes: a positive-electrode-current-collector including metal foil; a positive-electrode-layer formed on the positive-electrode-current-collector and containing at least a positive-electrode-active-material; a negative-electrode-current-collector including a metal foil; a negative-electrode-layer formed on the negative-electrode-current-collector and containing at least a negative-electrode-active-material; and a solid-electrolyte-layer disposed between the positive-electrode-layer and the negative-electrode-layer and containing at least a solid electrolyte having ion conductivity, and the all-solid battery contains a thermoplastic elastomer into which a functional group that adheres at least any of the positive-electrode-active-material and the positive-electrode-current-collector, the positive-electrode-active-material and the solid electrolyte, the positive-electrode-active-materials themselves, the negative-electrode-active-material and the negative-electrode-current-collector, the negative-electrode-active-material and the solid electrolyte, the negative-electrode-active-materials themselves, and the solid electrolytes themselves to each other is introduced.

## Description

### TECHNICAL FIELD

The present disclosure relates to an all-solid battery, and more particularly to an all-solid battery using a positive electrode layer, a negative electrode layer, and a solid electrolyte layer.

### BACKGROUND ART

With the spread of lightweight and cordless electronic devices such as personal computers and mobile phones in recent years, demands on development of rechargeable secondary batteries have been increased. Among secondary batteries such as nickel cadmium batteries, nickel hydride batteries, lead storage batteries, and lithium ion batteries, lithium ion batteries are particularly attracting attention due to the characteristic features such as lightweight, high voltage, and high energy density.

Even in the car industry related to electric vehicles or hybrid vehicles, emphasis has been placed on the development of high capacity secondary batteries, and the demand for lithium ion batteries is increasing more and more.

A lithium ion battery is constituted by a positive electrode layer, a negative electrode layer, and an electrolyte disposed therebetween. The electrolyte to be used may be a solid electrolyte or an electrolytic solution obtained by dissolving a supporting salt, for example, lithium hexafluorophosphate, in an organic solvent. Lithium ion batteries which have been used widely in these days are flammable because the electrolyte being used contains an organic solvent. This necessitates employing materials, structures, and systems reliable in safety. Meanwhile, it is expected that those materials, structures, and systems can be simplified by using the solid electrolyte, which is inflammable, thereby increasing energy density, reducing manufacturing cost, and improving productivity. Hereinafter, the battery using the solid electrolyte will be referred to as "all-solid battery".

The solid electrolyte can be roughly divided into organic solid electrolytes and inorganic solid electrolytes. The organic solid electrolytes have an ion conductivity of about 10⁻⁶ S/cm at 25°C, which is extremely low as compared with 10⁻³ S/cm of the electrolytic solution. Therefore, it is difficult to operate an all-solid battery using an organic solid electrolyte in an environment of 25°C. As the inorganic solid electrolyte, there are oxide solid electrolytes and sulfide solid electrolytes. Ion conductivities of these are 10⁻⁴ to 10⁻³ S/cm. The oxide solid electrolytes have high grain boundary resistance. As means for lowering the grain boundary resistance, sintering and thinning of the powder have been studied. In the case of sintering, the solid electrolyte is treated at high temperature. Thus, the constituent elements of the positive electrode or the negative electrode and the constituent elements of the solid electrolyte mutually diffuse, causing it difficult to obtain satisfactory charge and discharge characteristics. For this reason, studies on all-solid batteries using the oxide solid electrolyte are mainly conducted for thin films. However, there are difficulties in increasing the size of batteries, and thus thin-film type all-solid batteries are considered unsuitable for achieving high capacity.

On the contrary, the sulfide solid electrolytes have smaller grain boundary resistance than the oxide solid electrolytes, and thus favorable characteristics can be obtained simply by performing compression molding of powder without performing a sintering process. In the development of all-solid batteries for further increasing the size and capacity of the batteries, researches on coating-type all-solid batteries which use sulfide solid electrolytes and can be made large-sized have been actively studied in recent years. The coating-type all-solid battery is constituted by a positive electrode layer in which a positive electrode active material, a solid electrolyte and a binder are formed on a positive electrode current collector including a metal foil, a negative electrode layer in which a negative electrode active material, a solid electrolyte, and a binder are formed on a negative electrode current collector including a metal foil, and a solid electrolyte layer disposed between these electrodes and containing a solid electrolyte and a binder. The binder contained in the solid electrolyte and the positive electrode layer or the negative electrode layer is required to increase adhesion strengths between particles, for example, between as an active material and another active material, between an active material and an solid electrolyte, between an solid electrolyte and another solid electrolyte (between solid electrolytes themselves), which are contained in the positive electrode layer and the negative electrode layer, between the coating film and the current collector, and between a solid electrolyte and a solid electrolyte (between solid electrolytes themselves) which are contained in the solid electrolyte layer. Meanwhile, the ion conductivity of the binder is extremely low compared to that of the solid electrolyte. This causes the characteristics of the battery to degrade.

PTL 1 discloses a manufacturing method for improving adhesion strength between a positive electrode coating film in a positive electrode layer and a positive electrode current collector without adding a binder. PTL 2 discloses an electrode plate in which an appropriate amount of styrene-butylene rubber is added as binder, and both the adhesion strength and battery characteristics are achieved.

### Citation List

### Patent Literature

PTL 1: Japanese Patent No. 5747506
PTL 2: Japanese Patent No. 5375975

### SUMMARY

An all-solid battery according to an embodiment of the present disclosure includes a positive electrode current collector including a metal foil, a positive electrode layer formed on the positive electrode current collector and containing at least a positive electrode active material, a negative electrode current collector including a metal foil, a negative electrode layer formed on the negative electrode current collector and containing at least a negative electrode active material, a solid electrolyte layer disposed between the positive electrode layer and the negative electrode layer and containing at least a solid electrolyte having ion conductivity. The all-solid battery contains a thermoplastic elastomer into which a functional group is introduced. The functional group adheres at least one of a pair of the positive electrode active material and the positive electrode current collector, a pair of the positive electrode active material and the solid electrolyte, a pair of the positive electrode active materials, a pair of the negative electrode active material and the negative electrode current collector, a pair of the negative electrode active material and the solid electrolyte, a pair of the negative electrode active materials, and a pair of the solid electrolytes.

The all-solid battery achieves both the adhesion strength and the battery characteristics, which are in a trade-off relationship, and further, battery characteristics of the produced all-solid battery are hardly affected by temperature.

### BRIEF DESCRIPTION OF DRAWINGS

FIG. 1 is a diagram showing an all-solid battery according to an embodiment.
FIG. 2 is a diagram showing a positive electrode active material and a solid electrolyte before charging according to the embodiment.
FIG. 3 is a diagram showing the positive electrode active material and the solid electrolyte during charging according to the present embodiment.
FIG. 4 is a diagram showing the positive electrode active material and the solid electrolyte after charging according to the embodiment.
FIG. 5 is a diagram showing the positive electrode active material and the solid electrolyte after discharging according to the embodiment.
FIG. 6 is a diagram showing a positive electrode active material and a solid electrolyte before charging according to a comparative example.
FIG. 7 is a diagram showing the positive electrode active material and the solid electrolyte during charging according to the comparative example.
FIG. 8 is a diagram showing the positive electrode active material and the solid electrolyte after charging according to the comparative example.
FIG. 9 is a diagram showing the positive electrode active material and the solid electrolyte after discharging according to the comparative example.
FIG. 10 is a diagram showing the positive electrode layer in the embodiment.
FIG. 11 is a diagram showing the negative electrode layer in the embodiment.

### DESCRIPTION OF EMBODIMENT

Prior to the description of the embodiment, problems in the related art will be briefly described.

Patent Document 1 discloses a manufacturing method by which high adhesion strength between the positive electrode current collector and the positive electrode coating film is achieved. However, there is no binder contained in the positive electrode coating film, and thus, the adhesive strengths between an active material and another active material, between an active material and a solid electrolyte, and between a solid electrolyte and another solid electrolyte are extremely low. Patent Document 2 discloses a method by which increased adhesion strength and enhanced battery characteristics are achieved. However, a large amount of rubber binder is added into the all-solid battery, and thus, for example, material properties of binder such as hardness, tensile strength, and tensile elongation change in a low temperature region, and as a result, charge and discharge characteristics are greatly degraded.

The present disclosure has been made in view of the above problems, and it is an object of the present disclosure to provide an all-solid battery in which both the adhesion strength and the battery characteristics, which are in a trade-off relationship, are achieved, and of which the battery characteristics after produced are hardly affected by temperature.

Hereinafter, an all-solid battery and a solid electrolyte layer, a positive electrode layer, and a negative electrode layer constituting the all-solid battery according to the present embodiment will be described in detail. All of the embodiments described below represent non-exclusive or specific examples. Numerical values, shapes, materials, constituent elements, arrangement positions and connection modes of constituent elements, processes, and the like shown in the following embodiments are merely examples and are not intended to limit the all-solid batteries according to the present disclosure. Among the constituent elements in the following embodiments, constituent elements not described in an independent claim showing the highest concept are described as optional constituent elements.

### A. All-solid Battery

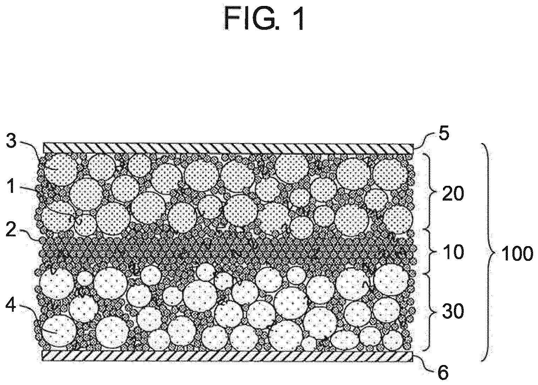

An all-solid battery according to the present embodiment will be described with reference to FIG. 1. All-solid battery 100 in the present embodiment is constituted by positive electrode current collector 5 including a metal foil, positive electrode layer 20 formed on positive electrode current collector 5 and containing positive electrode active material 3, negative electrode current collector 6, negative electrode layer 30 formed on negative electrode current collector 6 and containing negative electrode active material 4, and solid electrolyte layer 10 disposed between positive electrode layer 20 and negative electrode layer 30 and containing at least solid electrolyte 2 having ion conductivity. Here, all-solid battery 100 contains binder 1 containing a thermoplastic elastomer into which a functional group that adheres at least any of positive electrode active material 3 and positive electrode current collector 5, positive electrode active material 3 and solid electrolyte 2, positive electrode active materials 3 themselves (particles themselves constituting positive electrode active material 3), negative electrode active material 4 and negative electrode current collector 6, negative electrode active material 4 and solid electrolyte 2, negative electrode active materials 4 themselves (particles themselves constituting negative electrode active material 4), and solid electrolytes 2 themselves (particles themselves constituting solid electrolyte) to each other is introduced. In the present embodiment, binder 1 is contained in each of positive electrode layer 20, negative electrode layer 30, and solid electrolyte layer 10. Binder 1 contains a thermoplastic elastomer into which a functional group for improving adhesion strength is introduced.

In regards to a manufacturing method, positive electrode layer 20 formed on positive electrode current collector 5 including a metal foil and containing positive electrode active material 3, negative electrode layer 30 formed on negative electrode current collector 6 including a metal foil and containing negative electrode active material 4, and solid electrolyte layer 10 disposed between positive electrode layer 20 and negative electrode layer 30 and containing solid electrolyte 2 having ion conductivity are formed, and then those constituents are pressed from the outside of positive electrode current collector 5 and negative electrode current collector 6 at 4 ton/cm², and the filling ratio of at least one layer of the layers is set to 60% or more and less than 100% so as to produce all-solid battery 100. By setting the filling ratio of the layers to 60% or more, the voids in solid electrolyte layer 10, or in positive electrode layer 20, or in negative electrode layer 30 are reduced. Thus, Li conduction and electron conduction occur frequently, whereby satisfactory charge and discharge characteristics are achieved. Note that the filling rate is the ratio of the volume occupied by the material excluding the voids in the total volume.

A terminal is attached to the pressed all-solid battery 100, and then all-solid battery 100 is stored in a case. Examples of the case to be used for all-solid-battery 100 include an aluminum laminate bag, an SUS or iron case, an aluminum case, and a case made of resin.

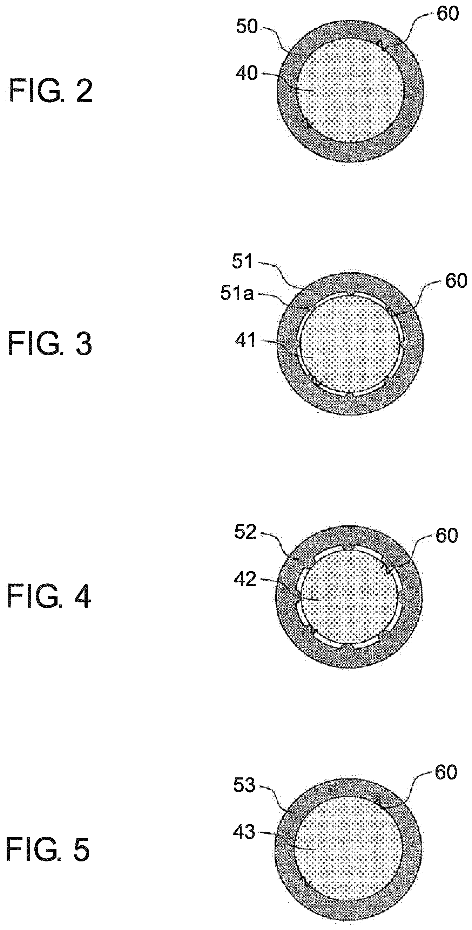

FIG. 2 shows positive electrode active material 40 (the positive electrode active material before charging according to the present embodiment, the same applies below) and solid electrolyte 50 (the solid electrolyte around the positive electrode active material before charging according to the present embodiment, the same applies below) in positive electrode layer 20 before charging according to the present embodiment. Positive electrode layer 20 is constituted by positive electrode active material 40, solid electrolyte 50, and binder 60 (the binder according to the present embodiment, the same applies below), and binder 60 adheres positive electrode active material 40 and solid electrolyte 50 to each other. Binder 60 contains a thermoplastic elastomer into which a functional group for improving adhesion strength is introduced. When the adhesion strength is high, the number of voids which interfere with Li conduction decreases, and as a result, the charge and discharge characteristics are improved.

FIG. 3 shows positive electrode active material 41 (the positive electrode active material during charging according to the present embodiment, the same applies below) and solid electrolyte 51 (the solid electrolyte around the positive electrode active material during charging according to the present embodiment, the same applies below) during charging according to the present embodiment. At the time of charging, Li contained in positive electrode active material 41 is discharged, and thus positive electrode active material 41 shrinks. Solid electrolyte 51 around the positive electrode active material which is strongly adhered to positive electrode active material 41 via binder 60 follows the shrinkage of positive electrode active material 41. There are fewer voids, which interfere with Li conduction, between solid electrolyte 51a followed the shrinkage of positive electrode active material 41 (the solid electrolyte followed shrinkage of the positive electrode active material according to the present embodiment, the same applies below) and positive electrode active material 41, and thus the charging capacity improves.

FIG. 4 shows positive electrode active material 42 (the positive electrode active material after charging according to the present embodiment, the same applies below) and solid electrolyte 52 (the solid electrolyte around the positive electrode active material after charging according to the present embodiment, the same applies below) after charging according to the present embodiment. Since solid electrolyte 52 follows the shrinkage of positive electrode active material 42 via binder 60, positive electrode active material 42 and solid electrolyte 52 are adhered to each other.

FIG. 5 shows positive electrode active material 43 (the positive electrode active material after discharging according to the present embodiment, the same applies below) and solid electrolyte 53 (the solid electrolyte around the positive electrode active material after discharging according to the present embodiment, the same applies below) after discharging according to the present embodiment. The positive electrode active material 43 and the solid electrolyte 53 are adhered to each other, and there are fewer voids, which interfere with Li conduction, and thus, Li conduction occurs from solid electrolyte 53 to positive electrode active material 43 at the time of discharge. As a result, Li discharged at the time of charging returns to the positive electrode active material 43, and thus satisfactory discharge characteristics can be obtained.

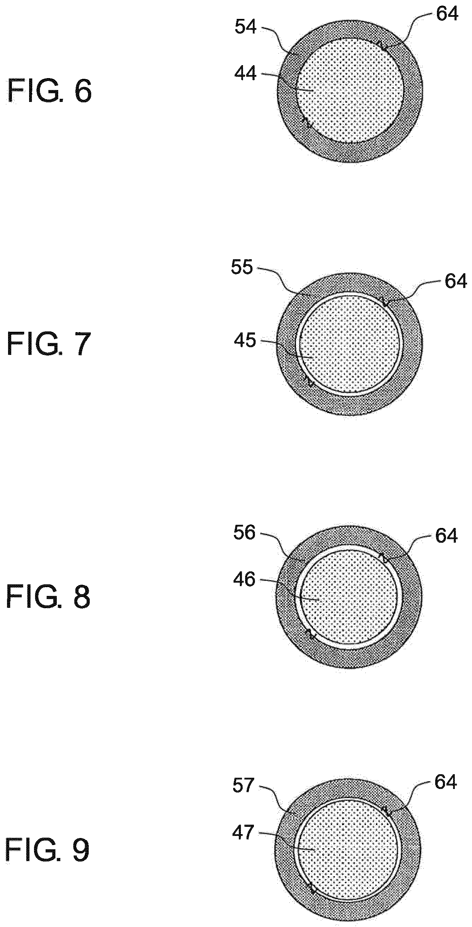

FIG. 6 shows positive electrode active material 44 (the positive electrode active material before charging according to a comparative example, the same applies below) and solid electrolyte (the solid electrolyte around the positive electrode active material before charging according to a comparative example, the same applies below) in a positive electrode layer before charging according to a comparative example. The positive electrode layer is constituted by positive electrode active material 44, solid electrolyte 54, and binder 64 (the binder according to the comparative example, the same applies below), and binder 64 adheres positive electrode active material 44 and solid electrolyte 54 to each other. Binder 64 does not contain a functional group for improving adhesion strength.

FIG. 7 shows positive electrode active material 45 (the positive electrode active material during charging according to the comparative example, the same applies below) and solid electrolyte 55 (the solid electrolyte around the positive electrode active material during charging according to the comparative example, the same applies below) during charging according to the comparative example. At the time of charging, Li contained in positive electrode active material 45 is discharged, and thus positive electrode active material 45 shrinks, but solid electrolyte 55 around the positive electrode active material is not strongly adhered to positive electrode active material 45 compared to the case in FIG. 5, and hardly follows the shrinkage of positive electrode active material 45. This means that Li is not sufficiently discharged from positive electrode active material 45. As a result, satisfactory charging characteristics cannot be obtained.

FIG. 8 shows positive electrode active material 46 (the positive electrode active material after charging according to the comparative example, the same applies below) and solid electrolyte 56 (the solid electrolyte around the positive electrode active material after charging according to the comparative example, the same applies below) after charging according to the comparative example. Since solid electrolyte 56 hardly follows the shrinkage of positive electrode active material 46, portions in which positive electrode active material 46 and solid electrolyte 56 are adhered to each other are small compared to the case of FIG. 6.

FIG. 9 shows positive electrode active material 47 (the positive electrode active material after discharging according to the comparative example, the same applies below) and solid electrolyte 57 (the solid electrolyte around the positive electrode active material after discharging according to the comparative example, the same applies below) after discharging according to the comparative example. Since positive electrode active material 47 and solid electrolyte 57 are not strongly adhered, there are many voids that interfere with Li conduction between positive electrode active material 47 and solid electrolyte 57. As a result, at the time of discharge, Li conduction from solid electrolyte 57 to positive electrode active material 47 occurs infrequently, and thus satisfactory discharge characteristics cannot be obtained.

All-solid battery 100 according to the present embodiment is characterized in that the binder density in positive electrode layer 20 is higher in the region near solid electrolyte 2 than in the region near positive electrode current collector 5. This is for improving the adhesion strength between positive electrode layer 20 and solid electrolyte layer 10 and reducing voids. As a result, Li conduction occurs frequently, and thus charge and discharge characteristics are improved. All-solid battery 100 is also characterized in that the binder density in negative electrode layer 30 is higher in the region near solid electrolyte 2 than the region near negative electrode current collector 6. This is for improving the adhesion strength between negative electrode layer 30 and solid electrolyte layer 10 and reducing voids. As a result, Li conduction occurs frequently, and thus charge and discharge characteristics are improved. The binder density in positive electrode layer 20 (or in negative electrode layer 30) (that is, the density of the thermoplastic elastomer) is the weight ratio of binder 1 (that is, the thermoplastic elastomer) in positive electrode layer 20 occupying the unit volume.

In positive electrode layer 20, there are more positive electrode active materials 3 where Li is discharged frequently in the region far from the positive electrode current collector 5 than in the region near positive electrode current collector 5. This is because the resistance in Li conduction is decreased as the distance to negative electrode layer 30 is shortened. Increasing the binder density in positive electrode layer 20 in the region far from the positive electrode current collector 5 than that in the region near positive electrode current collector 5 means forming a large amount of binder 1 in a place where much shrinkage due to discharge of Li occurs, and thus the charge and discharge characteristics are further improved.

### B. Solid Electrolyte Layer

First, solid electrolyte layer 10 according to the present embodiment will be described. The solid electrolyte layer 10 according to the present embodiment contains solid electrolyte 2 and binder 1. Binder 1 has a functional group for increasing the adhesion strength which reacts and binds with solid electrolyte 2 and thus high adhesion strength is realized. That is, in solid electrolyte layer 10, solid electrolytes 2 themselves are adhered to each other via binder 1 containing the thermoplastic elastomer into which the functional group for increasing the adhesion strength is introduced.

### 1. Solid Electrolyte

Solid electrolyte 2 according to the present embodiment will be described. Solid electrolyte 2 can be roughly divided into a sulfide solid electrolyte and an oxide solid electrolyte. Although the sulfide solid electrolyte in the present embodiment is not particularly limited, examples thereof include Li₂S-SiS₂, LiI-Li₂S-SiS₂, LiI-Li₂S-P₂S₅, LiI-Li₂S-P₂O₅, LiI-Li₃PO₄-P₂S₅, and Li₂S-P₂S₅. In particular, it is preferable to include Li, P, and S. This is for satisfactory ion conductivity of Li. This is also for high reactivity and high bondability with the binder of P₂S₅.

In the present embodiment, the sulfide solid electrolyte material is a sulfide glass ceramic containing Li₂S and P₂S₅, and the ratio of Li₂S and P₂S₅ is preferably within a range of Li₂S:P₂S₅ = 70 to 80:30 to 20, and more preferably within a range of 75 to 80:25 to 20 in terms of mol. This is to obtain crystal structure with high ion conductivity while maintaining the Li concentration, which affects the battery characteristics. This is also to secure the amount of P₂S₅ required to react and bind with the binder.

The oxide solid electrolyte according to the present embodiment will be described. Although the oxide solid electrolyte is not particularly limited, examples thereof include LiPON, Li₃PO₄, Li₂SiO₂, Li₂SiO₄, Li0_{0.5}La_{0.5}TiO₃, Li_{1.3}Al_{0.3}Ti_{0.7}(PO₄)₃, La_{0.51}Li_{0.34}TiO_{0.74}, and Li_{1.5}Al_{0.5}Ge_{1.5}(PO₄)₃.

### 2. Binder

Binder 1 according to the present embodiment will be described. Binder 1 according to the present embodiment is characterized by containing a thermoplastic elastomer into which a functional group for improving the adhesion strength is introduced, more preferably the functional group is a carbonyl group, and even more preferably the carbonyl group is maleic anhydride. This is because maleic anhydride improves adhesion strength. Specifically, the oxygen atoms of maleic anhydride react with solid electrolytes 2 and bond solid electrolytes 2 themselves to each other via binder 1 to form a structure in which binder 1 is disposed between solid electrolytes 2, and as a result, the adhesion strength improves.

Examples of the thermoplastic elastomer to be used include styrene-butadiene-styrene (SBS), and styrene-ethylene-butadiene-styrene (SEBS). These have high adhesion strength and allow the battery to exhibit high durability in the cycle characteristics of the battery. More preferably, a hydrogen-added (hereinafter, hydrogenated) thermoplastic elastomer is used. This is because the hydrogenation improves reactivity and binding property and improves the solubility in solvents used for forming solid electrolyte layer 10.

The add amount of binder 1 according to the present embodiment is preferably, for example, 0.01% by mass or more and 5% by mass or less, more preferably 0.1% by mass or more and 3% by mass or less, and even more preferably in the range of 0.1% by mass to 1% by mass. When the add amount of binder 1 is less than the above range, there is a possibility that bonding via binder 1 does not occur so that sufficient adhesion strength may not be obtained. When the amount of binder 1 is more than the above range, the degradation of battery characteristics such as charge and discharge characteristics may be caused. Furthermore, when the add amount of binder 1 is large, for example, material properties of binder 1 such as hardness, tensile strength, and tensile elongation change in a low temperature region, and as a result, charge and discharge characteristics are greatly degraded.

### C. Positive Electrode Layer

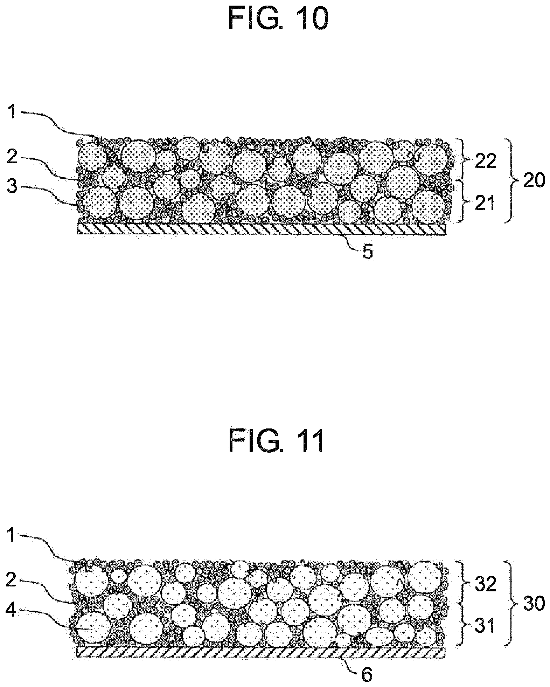

Positive electrode layer 20 according to the present embodiment will be described with reference to FIG. 10. Positive electrode layer 20 of the present embodiment includes solid electrolyte 2, positive electrode active material 3, and binder 1. In positive electrode layer 20, positive electrode active material 3 and solid electrolyte 2, positive electrode active material 3 and positive electrode current collector 5, solid electrolyte 2 and positive electrode current collector 5, positive electrode active materials 3, and solid electrolytes 2 are adhered to each other via binder 1 containing the thermoplastic elastomer into which a functional group for increasing adhesion strength is introduced. The ratio of solid electrolyte 2 and positive electrode active material 3 is preferably within a range of solid electrolyte:positive electrode active material = 50 to 5:50 to 95, and more preferably within a range of 30 to 10:70 to 90 in terms of weight. This is to secure both Li conduction and electron conduction in positive electrode layer 20. A conductive aid such as acetylene black and ketjen black may be added to positive electrode layer 20.

All-solid battery 100 is also characterized in that the binder density in positive electrode layer 20 is higher in the region near the solid electrolyte than in region near the current collector of the positive electrode layer 21, i.e., in region far from positive electrode current collector 5 (hereinafter, "region far from the current collector the of positive electrode layer 22") than in region near the current collector of the positive electrode layer 21. In short, in positive electrode layer 20, the density of the thermoplastic elastomer into which a functional group for improving adhesion strength in region near the current collector of the positive electrode layer 21 is introduced is lower than the density of the thermoplastic elastomer into which a functional group for improving adhesion strength in region far from the current collector of the positive electrode layer 22 is introduced. This is to improve the adhesion strength between positive electrode layer 20 and solid electrolyte layer 10 and thus to reduce the voids. As a result, Li conduction occurs frequently, and thus charge and discharge characteristics are improved.

In positive electrode layer 20, there are more positive electrode active materials 3 where Li is discharged frequently in region far from the current collector of the positive electrode layer 22 than in region near the current collector of the positive electrode layer 21. This is because the resistance in Li conduction is decreased as the distance to negative electrode layer 30 is shortened. Increasing the binder density in positive electrode layer 20 in region far from the current collector of the positive electrode layer 22 higher than in region near the current collector of the positive electrode layer 21 means forming a large amount of binder 1 in a place where much shrinkage due to discharge of Li occurs, and thus the charge and discharge characteristics are further improved.

Examples of positive electrode collector 5 including a metal foil include SUS, aluminum, nickel, titanium, and copper.

### 1. Solid Electrolyte

Since the solid electrolyte is the same as the one described above, the explanation will be omitted.

### 2. Binder

Since the binder is the same as the one described above, the explanation will be omitted.

### 3. Positive Electrode Active Material

Positive Electrode Active Material 3 according to the present embodiment will be described. In positive electrode active material 3 according to the present embodiment, a lithium-containing transition metal oxide is used. Examples thereof include LiCoO₂, LiNiO₂, LiMn₂O₄, LiCoPO₄, LiNiPO₄, LiFePO₄, LiMnPO₄, and compounds obtained by substituting transition metals of these compounds with one or two different elements. Examples of the compounds obtained by substituting the transition metal of these compounds with one or two different elements include known materials such as LiNi_{1/3}Co_{1/3}Mn_{1/3}O₂, LiNi_{0.8}Co_{0.15}Al_{0.05}O₂, and LiNi_{0.5}Mn_{1.5}O₂.

### D. Negative Electrode Layer

Negative electrode layer 30 according to the present embodiment is shown in FIG. 11. Negative electrode layer 30 of the present embodiment includes solid electrolyte 2, negative electrode active material 4, and binder 1. In negative electrode layer 30, negative electrode active material 4 and solid electrolyte 2, negative electrode active material 4 and negative electrode current collector 6, solid electrolyte 2 and negative electrode current collector 6, negative electrode active materials 4 themselves, and solid electrolytes 2 themselves are adhered to each other via binder 1 containing the thermoplastic elastomer into which a functional group for increasing adhesion strength is introduced. The ratio of solid electrolyte 2 and negative electrode active material 4 is preferably within a range of solid electrolyte: negative electrode active material = 5 to 60:95 to 40, and more preferably within a range of 30 to 50:70 to 50 in terms of weight. This is to secure both Li conduction and electron conduction in negative electrode layer 30. A conductive aid such as acetylene black and ketjen black may be added to negative electrode layer 30.

All-solid battery 100 is also characterized in that the binder density in negative electrode layer 30 is higher in the region far from negative electrode current collector 6 (hereinafter, "region far from the current collector of the negative electrode layer 32") than in region near the current collector of the negative electrode layer 31. In short, in negative electrode layer 30, the density of the thermoplastic elastomer into which a functional group for improving adhesion strength in region near the current collector of the negative electrode layer 31 is introduced is lower than the density of the thermoplastic elastomer into which a functional group for improving adhesion strength in region far from the current collector of the negative electrode layer 32 is introduced. This is because the adhesion strength between negative electrode layer 30 and solid electrolyte layer 10 when negative electrode layer 30 and solid electrolyte layer 10 are disposed in forming all-solid battery 100 is increased, and the voids which interfere with Li conduction are reduced. As a result, charge and discharge characteristics are improved. Examples of negative electrode current collector 6 including a metal foil includes SUS, copper, and nickel.

### 1. Solid Electrolyte

Since the solid electrolyte is the same as the one described above, the explanation will be omitted.

### 2. Binder

Since the binder is the same as the one described above, the explanation will be omitted.

### 3. Negative Electrode Active Material

Negative Electrode Active Material 4 according to the present embodiment will be described. Examples of negative electrode active material 4 to be used according to the present embodiment include metal foils formed of metals which are easily alloyed with lithium such as lithium, indium, tin and solicon; carbon materials such as hard carbon and graphite; and known materials such as Li₄Ti₅O₁₂ and SiO_{X}.

### EXAMPLES

Hereinafter, examples of the present embodiment will be described, but the embodiment is not limited to these examples. Unless otherwise specified, examples were carried out in a glove box or in a dry room whose dew point was controlled to be not higher than -45°C.

### (Example 1)

### (1) Preparation of Solid Electrolyte Li₂S-P₂S₅

Li₂S and P₂S₅ were weighed such that the ratio was Li₂S:P₂S₅ = 80:20 in terms of mol, and pulverized and mixed using a mortar. Next, milling treatment was carried out for 10 hours by a planetary ball mill, whereby a solid electrolyte in a glass state was obtained. Thereafter, the above-mentioned solid electrolyte in a glass state was annealed in an inert gas atmosphere to obtain a solid electrolyte in a glass ceramics state. The annealing temperature was determined with reference to the temperature of the crystallization peak obtained by differential thermal analysis measurement.

The ion conductivity of the obtained solid electrolyte was measured by an AC impedance method to be 7.5 × 10⁻⁴ S/cm.

### (2) Preparation of Solid Electrolyte Coating Film

First, 2 g of 80Li₂S-20P₂S₅ as a solid electrolyte, and 0.002 g of maleic anhydride-modified hydrogenated SEBS (M1913 manufactured by Asahi Kasei Corporation) as a binder were prepared and these were dissolved or dispersed in 2 g of a solvent to prepare a slurry for a solid electrolyte coating film. At this time, maleic anhydride-modified hydrogenated SEBS was 0.1% by mass based on the solid electrolyte 80Li₂S-20P₂S₅. Next, the slurry was applied onto a current collector. Thereafter, drying treatment was carried out at 100°C for 10 minutes, and the solvent was removed to prepare a solid electrolyte coating film. The film thickness of the solid electrolyte coating film was 150 µm.

### (Comparative Example 1-1)

A solid electrolyte coating film of Comparative Example 1-1 was prepared in the same manner as in Example 1 except that hydrogenated SEBS (S1611 manufactured by Asahi Kasei Corporation) was used as the binder.

### (Comparative Example 1-2)

A solid electrolyte coating film of Comparative Example 1-2 was prepared in the same manner as in Example 1 except that SBR (TR 2000 manufactured by JSR) was used as the binder.

### (Comparative Example 1-3)

A solid electrolyte coating film of Comparative Example 1-3 was prepared in the same manner as in Example 1 except that no binder was added.

### (Example 2)

First, 1.4 g of LiNi_{0.8}Co_{0.15}Al_{0.05}O₂ (average particle size: 5 µm) as a positive electrode active material and 0.6 g of the solid electrolyte 80Li₂S-20P₂S₅ in a glass ceramic state were prepared and pulverized and mixed in a mortar. The obtained powder will be referred to as a positive electrode mixture. The positive electrode mixture and 0.001 g of maleic anhydride-modified hydrogenated SEBS (M1913 manufactured by Asahi Kasei Corporation) were prepared and dissolved or dispersed in 2 g of a solvent to prepare a slurry for a positive electrode. At this time, the maleic anhydride-modified hydrogenated SEBS was 0.05% by mass with respect to the positive electrode mixture. Next, the slurry was applied onto a current collector. Thereafter, drying treatment was carried out at 100°C for 10 minutes, and the solvent was removed to prepare a positive electrode coating film. The film thickness of the positive electrode coating film was about 70 µm.

### (Comparative Example 2-1)

A positive electrode coating film of Comparative Example 2-1 was prepared in the same manner as in Example 2 except that hydrogenated SEBS (S1611 manufactured by Asahi Kasei Corporation) was used as the binder.

### (Comparative Example 2-2)

A positive electrode coating film of Comparative Example 2-2 was prepared in the same manner as in Example 2 except that SBR (TR 2000 manufactured by JSR) was used as the binder.

### (Comparative Example 2-3)

A positive electrode coating film of Comparative Example 2-3 was prepared in the same manner as in Example 2 except that no binder was added.

### (Example 3)

First, 0.8 g of graphite as a negative electrode active material and 1.2 g of the solid electrolyte 80Li₂S-20P₂S₅ in a glass ceramic state were prepared and pulverized and mixed in a mortar. The obtained powder will be referred to as a negative electrode mixture. The negative electrode mixture and 0.001 g of maleic anhydride-modified hydrogenated SEBS (M1913 manufactured by Asahi Kasei Corporation) were prepared and dissolved or dispersed in 2 g of a solvent to prepare a slurry for a negative electrode. At this time, the maleic anhydride-modified hydrogenated SEBS was 0.1% by mass with respect to the negative electrode mixture. Next, the slurry was applied onto a current collector. Thereafter, drying treatment was carried out at 100°C for 10 minutes, and the solvent was removed to prepare a negative electrode coating film. The film thickness of the negative electrode coating film was about 150 µm.

### (Comparative Example 3-1)

A negative electrode coating film of Comparative Example 3-1 was prepared in the same manner as in Example 3 except that hydrogenated SEBS (S1611 manufactured by Asahi Kasei Corporation) was used as the binder.

### (Comparative Example 3-2)

A negative electrode coating film of Comparative Example 3-2 was prepared in the same manner as in Example 3 except that hydrogenated SBR (TR 2000 manufactured by JSR) was used as the binder.

### (Comparative Example 3-3)

A negative electrode coating film of Comparative Example 3-3 was prepared in the same manner as in Example 3 except that no binder was added.

### (Winding Test of Examples 1 to 3 and Comparative Examples 1-1 to 3-3)

Using the coating films prepared in Examples 1 to 3 and Comparative Examples 1-1 to 3-3, adhesion in the coating film and adhesion between the coating film and the current collector were evaluated. A PTFE rod of 10 mm in diameter was prepared and each of the coating films was wound around the rod to visually evaluate the cracks. Those in which apparent crack could be confirmed in the visual observation were rated as "C", those in which partial crack could be confirmed in the visual observation were rated as "B", and those in which no crack could be confirmed in the visual observation were rated as "A". The results are shown in Table 1.

**[Table 1]**

| | Layer | Binder | Result |
|---|---|---|---|
| Example 1 | Solid Electrolyte | M1913 | A |
| Example 2 | Positive Electrode | M1913 | B |
| Example 3 | Negative Electrode | M1913 | B |
| Comparative Example 1-1 | Solid Electrolyte | S1611 | B |
| Comparative Example 1-2 | Solid Electrolyte | TR2000 | B |
| Comparative Example 1-3 | Solid Electrolyte | No binder | C |
| Comparative Example 2-1 | Positive Electrode | S1611 | C |
| Comparative Example 2-2 | Positive Electrode | TR2000 | C |
| Comparative Example 2-3 | Positive Electrode | No binder | C |
| Comparative Example 3-1 | Negative Electrode | S1611 | C |
| Comparative Example 3-2 | Negative Electrode | TR2000 | C |
| Comparative Example 3-3 | Negative Electrode | No binder | C |

As shown in Table 1, it has been confirmed that the adhesion strengths of Comparative Examples 1-1, 1-2, 2-1, 2-2, 3-1, and 3-2, using a binder not modified with maleic anhydride, and the adhesion strengths of Comparative Examples 1-3, 2-3, and 3-3, in which binder was not added, were lower than the adhesion strengths of Examples 1 to 3, using maleic anhydride-modified hydrogenated SEBS as the binder. Furthermore, although Example 1 using maleic anhydride-modified hydrogenated SEBS in the solid electrolyte coating film had high adhesion strength, the adhesion strengths of the positive electrode coating film and the negative electrode coating film shown in Examples 2 and 3 were lower than that of the solid electrolyte coating film. It is thought that the amounts of sulfide solid electrolyte in the positive and negative electrode coating films are smaller than that of the solid electrolyte layer coating film, which causes the bonding number of the oxygen atom of maleic anhydride and the P₂S₅ used as a solid electrolyte in the Examples to be small. From the winding test, it has been found that the adhesion between the current collector and each of the coating films is excellent, in spite of the densities of the binders of the positive electrode coating film, the negative electrode coating film, and the solid electrolyte coating film of the Examples which are higher in the region far from the current collectors than in the region near the current collectors. This means that when solid electrolyte coating films are disposed between the coating films and the current collectors and between the coating films themselves, for example, in the all-solid battery, between the positive electrode coating film and the negative electrode coating film, the adhesion strengths between the positive electrode coating film and the solid electrolyte coating film and between the negative electrode coating film and the solid electrolyte coating film are high.

### (Li-ion Conductivity Measurement of Example 1 and Comparative Example 1-3)

Using the solid electrolyte layer coating films obtained in Example 1 and Comparative Example 1-3, the Li ion conductivity was measured by an AC impedance method. The results are shown in Table 2.

**[Table 2]**

| | Layer | Ion Conductivity (S/cm) |
|---|---|---|
| Example 1 | Solid Electrolyte | 3.97×10⁻⁴ |
| Comparative Example 1-3 | Solid Electrolyte | 3.02×10⁻⁴ |

As shown in Table 2, it has been found that when maleic anhydride-modified hydrogenated SEBS was added in an amount of 0.1% by mass based on the solid electrolyte (Example 1), the ion conductivity was not changed significantly as compared with that in the case without binder (Comparative Example 1-3). This means that degradation of the battery characteristics is prevented while maintaining the adhesion strength. Due to extremely low binder amount, it is prevented that material properties of binder such as hardness, tensile strength, and tensile elongation change in a low temperature region thereby greatly changing the internal state of battery, and charge and discharge characteristics are greatly degraded, for example.

### (Electron Conductivity Measurement of Examples 2 and 3, and Comparative Examples 2-3 and 3-3)

Electron conductivities were measured using the positive electrode layers obtained in Example 2 and Comparative Example 2-3 and the negative electrode layers obtained in Example 3 and Comparative Example 3-3. The results are shown in Table 3.

**[Table 3]**

| | Layer | Electron Conductivity (S/cm) |
|---|---|---|
| Example 2 | Positive Electrode | 0.64 |
| Comparative Example 2-3 | Positive Electrode | 2.52 |
| Example 3 | Negative Electrode | 7.26 |
| Comparative Example 3-3 | Negative Electrode | 6.97 |

As shown in Table 3, it has been found that when maleic anhydride-modified hydrogenated SEBS was added in an amount of 0.05% by mass based on the positive electrode active material (Example 2), the electron conductivity was not changed significantly as compared with that in the case without binder (Comparative Example 2-3). This means that degradation of the battery characteristics is prevented while maintaining the adhesion strength. Similarly, it has been found that when maleic anhydride-modified hydrogenated SEBS was added in an amount of 0.1% by mass based on the negative electrode active material (Example 3), the electron conductivity was not changed significantly as compared with that in the case without binder (Comparative Example 3-3). This means that degradation of the battery characteristics is prevented while maintaining the adhesion strength. Due to extremely low binder amount, it is prevented that material properties of binder such as hardness, tensile strength, and tensile elongation change in a low temperature region thereby greatly changing the internal state of battery, and charge and discharge characteristics are greatly degraded, for example.

As described above, all-solid battery 100 in the present embodiment includes positive electrode current collector 5 including a metal foil, positive electrode layer 20 formed on positive electrode current collector 5 and containing at least positive electrode active material 3, negative electrode current collector 6 including a metal foil, negative electrode layer 30 formed on negative electrode current collector 6 and containing at least negative electrode active material 4, and solid electrolyte layer 10 disposed between positive electrode layer 20 and negative electrode layer 30 and containing at least solid electrolyte 2 having ion conductivity, and contains binder 1 containing the thermoplastic elastomer into which a functional group that adheres at least any of positive electrode active material 3 and positive electrode current collector 5, positive electrode active material 3 and solid electrolyte 2, positive electrode active materials 3 themselves, negative electrode active material 4 and negative electrode current collector 6, negative electrode active material 4 and solid electrolyte 2, negative electrode active materials 4 themselves, and solid electrolytes 2 themselves to each other is introduced.

This allows all-solid battery 100 to include the thermoplastic elastomer into which a functional group that adheres particles constituting the same material or different materials to each other is introduced, so that the adhesion strengths between the materials constituting all-solid battery 100 are secured without degradation of battery characteristics. Furthermore, by using the thermoplastic elastomer as the binder, adhesion strength is secured without using a large amount of binder. Thus, changes of the hardness and the like of binder in a low temperature region and a significant amount of degradation of the battery characteristics such as charge and discharge characteristics resulting therefrom like the case of using a large amount of rubber binder are avoided, allowing the battery characteristics to be hardly affected by the temperature. Therefore, all-solid battery 100 in which both the adhesion strength and the battery characteristics, which are in a trade-off relationship, are achieved, and of which the battery characteristics after produced are hardly affected by temperature is realized.

The functional group is preferably a carbonyl group, and more preferably maleic anhydride. This allows the oxygen atoms of maleic anhydride to react with solid electrolyte 2, and thus the adhesion strength improves.

The thermoplastic elastomer is preferably hydrogenated. This hydrogenation allows reactivity and binding property to be improved, and further the solubility in solvents used for forming solid electrolyte layer 10 to be improved.

The content of the thermoplastic elastomer is preferably 0.01% by mass or more and 5% by mass or less relative to at least one of solid electrolyte 2, positive electrode active material 3, and negative electrode active material 4. This formulation allows sufficient adhesion strength to be secured and the problem that the battery characteristics are significantly degraded in a low temperature region due to an excessive amount of thermoplastic elastomer to be avoided.

The filling rate of at least one of positive electrode layer 20, negative electrode layer 30, and solid electrolyte layer 10 is 60% or more and less than 100%. This allows the voids in solid electrolyte layer 10, or in positive electrode layer 20, or in negative electrode layer 30 to be reduced. Thus, Li conduction and electron conduction occur frequently, whereby satisfactory charge and discharge characteristics are achieved.

Further, in positive electrode layer 20, the density of the thermoplastic elastomer into which the functional group for improving the adhesion strength in the region near positive electrode current collector 5 is introduced is lower than the density of the thermoplastic elastomer into which the functional group for improving the adhesion strength in the region far from the positive electrode current collector 5 is introduced. This allows the adhesion strength between positive electrode layer 20 and solid electrolyte layer 10 to be improved, thereby reducing the voids. As a result, Li conduction occurs frequently, and thus charge and discharge characteristics are improved.

Further, in negative electrode layer 30, the density of the thermoplastic elastomer into which the functional group for improving the adhesion strength in the region near negative electrode current collector 6 is introduced is lower than the density of the thermoplastic elastomer into which the functional group for improving the adhesion strength in the region far from negative electrode current collector 6 is introduced. This allows the adhesion strength between negative electrode layer 30 and solid electrolyte layer 10 to be improved and the voids which interfere with Li conduction to be reduced charge and discharge characteristics are improved.

Positive electrode layer 30 further includes solid electrolyte 2, and negative electrode layer 30 further includes solid electrolyte 2. In positive electrode layer 20, positive electrode active material 3 and solid electrolyte 2 are adhered to each other via the thermoplastic elastomer. In negative electrode layer 30, negative electrode active material 4 and solid electrolyte 2 are adhered to each other via the thermoplastic elastomer. In solid electrolyte layer 10, solid electrolytes 2 themselves are adhered to each other via the thermoplastic elastomer.

This allows all-solid battery 100 to include the thermoplastic elastomer into which a functional group that adheres particles constituting the same material or different materials to each other is introduced, so that the adhesion strength of the material constituting all-solid battery 100 is secured without degradation of battery characteristics. Furthermore, by using a thermoplastic elastomer as the binder, adhesion strength is secured without using a large amount of binder. Thus, changes of the hardness and the like of binder in a low temperature region and a significant amount of degradation of the battery characteristics such as charge and discharge characteristics resulting therefrom like the case of using large amount of rubber binder are avoided, allowing the battery characteristics to be hardly affected by the temperature. Therefore, all-solid battery 100 in which both the adhesion strength and the battery characteristics, which are in a trade-off relationship, are achieved, and of which the battery characteristics after produced are hardly affected by temperature is realized.

Although the all-solid battery according to the present disclosure has been described based on the embodiments and Examples, the all-solid battery according to the present disclosure is not limited to these embodiments and Examples. Unless departing from the spirit of the present disclosure, forms to which embodiments and examples of various modifications which those skilled in the art may conceive and forms assembled by combining constituent elements in different embodiments and examples are included within the scope of the all-solid battery according to the present disclosure.

For example, in the above embodiment, all of positive electrode layer 20, negative electrode layer 30, and solid electrolyte layer 10 contain binder 1 containing the thermoplastic elastomer, but binder 1 is only needs to be included in at least one of positive electrode layer 20, negative electrode layer 30, and solid electrolyte layer 10. This is because the adhesion strength of at least the layer containing binder 1 is improved, and thus both the adhesion strength and battery characteristics are achieved, and temperature dependence of battery characteristics are further improved as compared with those in the case of the conventional all-solid batteries.

In the above embodiment, although positive electrode active material 3 and solid electrolyte 2, positive electrode active material 3 and positive electrode current collector 5, solid electrolyte 2 and positive electrode current collector 5, positive electrode active materials 3 themselves, and solid electrolytes 2 themselves are adhered to each other via binder 1 containing the thermoplastic elastomer into which a functional group for improving adhesion strength is introduced in positive electrode layer 20, it is sufficient that at least one pair of these are adhered. Similarly, in the above embodiment, although negative electrode active material 4 and solid electrolyte 2, negative electrode active material 4 and negative electrode current collector 6, solid electrolyte 2 and negative electrode current collector 6, negative electrode active materials 4 themselves, and solid electrolytes 2 themselves are adhered to each other via binder 1 containing the thermoplastic elastomer into which a functional group for improving adhesion strength is introduced in negative electrode layer 30, it is sufficient that at least one pair of these are adhered. This is because the adhesion strength of the pair adhered via binder 1 is improved, and thus, both the adhesion strength and the battery characteristics are achieved, and temperature dependence of battery characteristics are further improved as compared with the case of the conventional all-solid batteries.

### INDUSTRIAL APPLICABILITY

The all-solid battery according to the present disclosure is expected to be applied to a power source of a portable electronic device or the like and a battery for a vehicle.

### REFERENCE MARKS IN THE DRAWINGS

1, 60, 64 BINDER
2, 50, 51, 51a, 52, 53, 54, 55, 56, 57 SOLID ELECTROLYTE
3, 40, 41, 42, 43, 44, 45, 46, 47 POSITIVE ELECTRODE ACTIVE MATERIAL
4 NEGATIVE ELECTRODE ACTIVE MATERIAL
5 POSITIVE ELECTRODE CURRENT COLLECTOR
6 NEGATIVE ELECTRODE CURRENT COLLECTOR
10 SOLID ELECTROLYTE LAYER
20 POSITIVE ELECTRODE LAYER
21 REGION NEAR CURRENT COLLECTOR OF POSITIVE ELECTRODE LAYER
22 REGION FAR FROM CURRENT COLLECTOR OF POSITIVE ELECTRODE LAYER
30 NEGATIVE ELECTRODE LAYER
31 REGION NEAR CURRENT COLLECTOR OF NEGATIVE ELECTRODE LAYER
32 REGION FAR FROM CURRENT COLLECTOR OF NEGATIVE ELECTRODE LAYER
100 ALL-SOLID BATTERY

## Claims

1. An all-solid battery comprising:
a positive electrode current collector including a metal foil;
a positive electrode layer formed on the positive electrode current collector and containing at least a positive electrode active material;
a negative electrode current collector including a metal foil;
a negative electrode layer formed on the negative electrode current collector and containing at least a negative electrode active material; and
a solid electrolyte layer disposed between the positive electrode layer and the negative electrode layer and containing at least a solid electrolyte having ion conductivity,
wherein the all-solid battery contains a thermoplastic elastomer into which a functional group is introduced, the functional group adhering at least one of a pair of the positive electrode active material and the positive electrode current collector, a pair of the positive electrode active material and the solid electrolyte, a pair of the positive electrode active materials, a pair of the negative electrode active material and the negative electrode current collector, a pair of the negative electrode active material and the solid electrolyte, a pair of the negative electrode active materials, and a pair of the solid electrolytes.

2. The all-solid battery of Claim 1, wherein the functional group is a carbonyl group.

3. The all-solid battery of Claim 2, wherein the carbonyl group is maleic anhydride.

4. The all-solid battery of Claim 1, wherein the thermoplastic elastomer is hydrogenated.

5. The all-solid battery of Claim 1, wherein a content of the thermoplastic elastomer is 0.01% by mass or more and 5% by mass or less with respect to at least one of the solid electrolyte, the positive electrode active material, and the negative electrode active material.

6. The all-solid battery of Claim 1, wherein a filling rate of at least one of the positive electrode layer, the negative electrode layer, and the solid electrolyte layer is 60% or more and less than 100%.

7. The all-solid battery of Claim 1, wherein in the positive electrode layer, a density of the thermoplastic elastomer into which a functional group for improving adhesion strength in a region near the positive electrode current collector is introduced is lower than a density of the thermoplastic elastomer into which a functional group for improving adhesion strength in a region far from the positive electrode current collector is introduced.

8. The all-solid battery of Claim 1, wherein in the negative electrode layer, a density of the thermoplastic elastomer into which a functional group for improving adhesion strength in a region near the negative electrode current collector is introduced is lower than a density of the thermoplastic elastomer into which a functional group for improving adhesion strength in a region far from the negative electrode current collector is introduced.

9. The all-solid battery of Claim 1, wherein
the positive electrode layer further includes the solid electrolyte,
the negative electrode layer further includes the solid electrolyte,
the positive electrode active material and the solid electrolyte are adhered to each other via the thermoplastic elastomer in the positive electrode layer,
the negative electrode active material and the solid electrolyte are adhered to each other via the thermoplastic elastomer in the negative electrode layer, and
the solid electrolytes are adhered to each other via the thermoplastic elastomer in the solid electrolyte layer.

10. The all-solid battery of Claim 7, wherein
the positive electrode layer further includes the solid electrolyte,
the negative electrode layer further includes the solid electrolyte,
the positive electrode active material and the solid electrolyte are adhered to each other via the thermoplastic elastomer in the positive electrode layer,
the negative electrode active material and the solid electrolyte are adhered to each other via the thermoplastic elastomer in the negative electrode layer,
and the solid electrolytes are adhered to each other via the thermoplastic elastomer in the solid electrolyte layer.

11. The all-solid battery of Claim 8, wherein
the positive electrode layer further includes the solid electrolyte,
the negative electrode layer further includes the solid electrolyte,
the positive electrode active material and the solid electrolyte are adhered to each other via the thermoplastic elastomer in the positive electrode layer,
the negative electrode active material and the solid electrolyte are adhered to each other via the thermoplastic elastomer in the negative electrode layer,
and the solid electrolytes are adhered to each other via the thermoplastic elastomer in the solid electrolyte layer.
